# EUROPEAN PATENT APPLICATION

(11) **EP 2 554 594 A1**
(43) Date of publication of application: **06.02.2013**
(21) Application number: 11176308.2
(22) Date of filing: 02.08.2011
(51) Int. Cl.: C08L 63/00, B29B 15/12, C03C 17/00, C03C 25/26, C08J 5/08, C08L 75/04

(54) **Sizing composition for charges used in thermoplastic polymeric material reinforcement, reinforced polymeric materials and method of manufacture**

(71) Applicant: 3B-Fibreglass SPRL, 4651 Battice (BE)
(72) Inventor: Masson, Nadia, 4877 Olne (BE); Piret, Willy, 4652 Xhendelesse (BE)
(74) Representative: Vandeberg, Marie-Paule L.G.

(57) **Abstract**

The invention relates to an aqueous sizing composition for reinforcing charges, preferably glass fibers, comprising a silane coupling agent, an epoxy film forming polymer comprising 2-8 reactive epoxy groups per chain and compatible with thermoplastic polyester matrix resin selected from PET and PBT, and a hypophosphite in an amount of 5 to 30 w% of the composition, preferably 7 to 25 w%, more preferably 10 to 20 w% and most preferably 12 to 18 w% of the composition. A thermoplastic polyester resin reinforced with glass fibers coated with a sizing composition of the invention shows improved resistance to staining and improved tensile elongation at break. The sizing composition further improves processability of the sized fibres.

## Description

### Background Of The Invention

The present invention relates to sizing compositions for reinforcement materials or charges, such as particulate charges including glass or sand, natural fibers, such as bamboo fibers, or mineral fibers, more specifically basalt, carbon or glass fibers, intended to be used as reinforcing material for polymeric matrix material, more specifically thermoplastic polymeric materials such as thermoplastic polyester materials, more specifically polyalkylene terephthalates such as polyethylene terephthalate (PET) or polybutylene terephthalate (PBT). The present invention further relates to reinforcing materials, more specifically mineral fibers, preferably glass fibres, treated with the sizing composition of the invention and to thermoplastic polymeric materials such as polyester materials, more specifically polyalkylene terephthalates, such as polyethylene terephthalate (PET) or polybutylene terephthalate (PBT), reinforced with such charges, more preferably glass fibers, treated with the sizing composition of the invention. Finally, the invention relates to processes for treatment of reinforcing materials and for the manufacture of reinforced polyester matrix material.

It is generally known to improve mechanical properties of thermoplastic materials by incorporating a reinforcing material or charge, often particulate mineral charges, such as glass or sand, or natural or mineral fibers, including carbon fibers or glass fibers. Mineral fibers and more specifically glass fibers are produced by continuously flowing molten mineral (rocks or glass) through so-called bushings. In the case of glass fibers, different qualities of glass may be used; the most common quality is the so-called E-glass known as electrical glass commonly used for insulators etc., for example Advantex glass available from Owens Corning. The obtained filaments may then be gathered into bundles and chopped at desired lengths before being mixed with a matrix resin.

It has become apparent; however, that the reinforcing properties of such charges or reinforcing materials may be optimized by improving the adhesion between the reinforcing material and the polymeric matrix it is intended to reinforce. It has thus been suggested to treat the reinforcing material with a so-called size or sizing composition. This sizing composition is intended to render the reinforcing material more compatible with the polymeric matrix material to be reinforced and to improve the processability of the relevant reinforcing material.

In the following description, reference is made to glass fiber charges. It is emphasized herewith that the described technology also applies to other mineral fibers, such as carbon fibers and fibers made of basalt or other rocks, and the present description and claims are not limited to glass charges or glass fibers.

In the case of fibers, it is preferable to treat the fibers before they are arranged into bundles of a multitude (from several hundreds to several thousands) of individual continuous fibers, which may then be chopped in desired length and dried and mixed with melted polymeric resin material. This mixing step may for instance be effected in an extruder, thus destroying the integrity of the chopped bundle segments, dispersing the fiber segments throughout the molten resin and forming fiber/resin pellets which may then be further processed into composite articles.

There is in recent times an increasing need in thermoplastic resin for different applications. Also fiber reinforced thermoplastic resins are increasingly gaining interest in molding applications. In order to increase its productivity, the compounding industry seeks to improve the compounding extruder throughput and also has a tendency to move towards the use of so-called mega-compounders. This requires increased quantities of fiber to be fed per time unit to the extruder with concomitant increased tendency of fuzz formation which in turn affects fiber transport.

In more recent processing equipments, the chopped reinforcing fiber bundles are transported by pneumatic systems which tend to dry the chopped fiber bundles, thus further increasing the risk of fuzz formation.

In the case of fibers, the sizing compositions used to render them compatible with polyester matrix resins have a tendency to render the treated fibers prone to electrostatic charging under certain conditions. Electrostatic charging further affects the transport or feeding of the fibers.

The assembling of article parts made of reinforced thermoplastic resin more and more occurs by snap fitting which requires improved mechanical properties such as improved elongation at break.

Furthermore, despite all progress made in stabilizing thermoplastic resin material, there is still a need to improve the stability to staining or discoloration, more particularly staining or discoloration of reinforced thermoplastic resin material, particularly due to the sizing composition applied on the reinforcing material.

Hypophosphite salts are known by the skilled artisan to improve certain characteristics of polymer resins containing them.

JP-2116648 proposes to spray hypophosphorous acid or a salt thereof (e.g. calcium hypophosphite) on a glass fiber bundle in an amount ranging from 0.05 to 1.5 % by weight of the fibers in order to improve the staining resistance of the resin matrix when such treated fibers are used to reinforce a thermoplastic resin other than polyphenylene sulfide, selected from a group comprising thermoplastic polyester resins, such as PBT, polyolefin resins or polyamide resins.

Similarly, EP-0344436 proposes to incorporate hypophosphorous acid or a salt thereof in a polyphenylene sulfide resin in an amount ranging from 0.01 to 5 % by weight of the resin composition in order to improve the impact resistance or staining resistance. In a preferred embodiment, hypophosphorous acid or a salt thereof is attached on the glass fiber bundle in an amount ranging from 0.05 to 1.5 % by weight of the fibers in order to improve the staining resistance of the polyphenylene sulfide resin matrix when such treated fibers are used to reinforce said resin.

US-6280571 suggests to prevent thermal degradation of certain water-soluble polymers by addition of phosphorous or hypophosphorous acid or a salt thereof in an amount of 0.01 - 75 w%, based on the total weight of polymer plus stabilizer.

WO95/25074 discloses glass fibers treated with a sizing composition having an organo functional inorganic coupling agent (around 1 to around 30 % by weight of the non-volatiles of the composition), a polyolefin compatible film forming acid-modified polyolefin (from around 50 to around 90 % by weight of the non-volatiles of the composition), one or more stabilizers (from around 1 to 25 % by weight of the non-volatiles of the composition) including hypophosphites, and a carrier such as water. Other additives such as emulsifiers, antifoams and surfactants may also be added. It is suggested that such treated fibers may advantageously be used to reinforce polypropylenes, polyethylenes and polyalkylene terephthalates, polyamides and others.

US-6207737 of the same patent family as WO95/25074 more specifically discloses an aqueous sizing composition for glass fibers used to reinforce for instance polyesters such as PBT and PET, comprising a coupling agent, e.g. functional organosilanes, an acid or acid anhydride modified polyolefinic film-forming material and a stabilizer effective against oxidizing phenomena, e.g. hypophosphites selected from alkali metal hypophosphites, alkaline earth metal hypophosphites, ammonium hypophosphite and mixtures thereof, preferably sodium and potassium hypophosphite, and possibly surfactants.

US-5646207 of the same patent family discloses similar compositions. While the film forming polymer may be selected from a list of polymers, the examples only disclose acid modified polypropylene polymer.

US-5130198 discloses a sizing composition for glass charges in polyester matrices, such as PET and PBT, with improved oxidative stability comprising a thermoplastic matrix-compatible polymer, more specifically a combination of polyurethane and epoxy polymers (when the matrix is PBT), an organofunctional silane glass resin coupling agent, a metal chelating agent and an antioxidant such as hypophosphite salts and possibly fiber lubricants and/or epoxy polyester processing aids and crosslinking agents. The antioxidants may be incorporated into the coating composition or added in a secondary treatment after the coating has been applied as size to the reinforcing substrate. The hypophosphite antioxidant ranges from about 0.001 to about 2 w% of the non-aqueous solids of the sizing composition, preferably up to about 1 w% and more preferably from 0.1 to about 0.3 w% of the composition when sodium hypophosphite is used. Assuming that the coating of aqueous sizing composition on the fibers is (as generally the case) from about 0.1 to about 2 % of fiber weight (LOI - loss on ignition), this equates to a maximum metal hypophosphite content of 0.04% of fiber weight. WO2004/110948 discloses a two-part sizing composition comprising a size composition and a binder composition, wherein the size composition comprises a coupling agent, e.g. a silane coupling agent, a cationic softener, a wetting agent and possibly further adjuvants, and wherein the binder composition comprises a non-ionic aqueous emulsion of an epoxy-ester resin and/or of a flexible epoxy resin, an aqueous polyurethane dispersion and possibly other adjuvants. The binder composition does not comprise any aminosilane coupling agent. The size composition may further comprise an antistatic agent such as a polyoxy-alkylene-amine. Some of the surfactants may also have an antistatic effect.

It is also worth noting that WO2009/062137 discloses aqueous sizing compositions for glass fibers, comprising an acid-amine component, the acid-amine component comprising molecules of at least one amine associated with molecules of at least one phosphorous-containing acid and/or sulfur containing acid. The phosphorous containing acid may be hypophosphorous acid.

EP-1452567 discloses a flame-retardant resin composition comprising a base resin which may be a PBT or PET resin, a flame retardant which may be a hypophosphorous ester, and a glass fiber optionally treated with a sizing agent containing a Novolac epoxy resin.

### Objects Of The Invention

The present invention seeks to further improve the resistance to staining and/or discoloration of thermoplastic polyester matrix compositions, such as PBT and PET, reinforced by mineral reinforcing charges, such as glass or sand charges, or natural or mineral fibers, more preferably glass fibers.

Another object of the invention is to further improve the mechanical properties, more specifically elongation at break, of thermoplastic polyester resin matrixes reinforced with mineral reinforcing charges, such as glass or sand charges, or natural or mineral fibers, more preferably glass fibers. As explained earlier above, polyester resin matrices are more and more looked at for the production of articles composed of parts to be assembled by snap fitting. In order to avoid breakage of the relevant parts at the assembling stage, a sufficient elongation at break is required.

Furthermore, the present invention seeks to enhance the electrostatic properties of treated fibers, thus improving the handling, transport and/or feeding efficiency of the treated fibers and reducing the maintenance costs of relevant equipment.

### Summary Of The Invention

The present invention provides an aqueous sizing composition for reinforcing charges, comprising a silane coupling agent, an epoxy film forming polymer compatible with polyester matrix resin and a hypophosphite, the hypophosphite being in an amount of 5 to 30 w% of the composition, preferably 7 to 25 w%, more preferably 10 to 20 w% and most preferably 12 to 18 w% of the composition.

The sizing composition of the invention may advantageously comprise further components, such as polyurethanes, and/or surfactants and other adjuvants commonly used in such sizing compositions and known to the person skilled in the art.

Silane coupling agents are well known in the art for having been used for a long time already. They facilitate adhesion of the organically based sizing composition and hence of the film forming polymer to the polar reinforcing charges, more particularly glass fibers. According to a preferred embodiment, the silane coupling agent is an amino functional silane. According to another preferred embodiment of the invention, the silane coupling agent is an organic epoxy silane.

The thermoplastic polyester matrix resin considered here is advantageously a polyalkylene terephthalate, preferably PET or PBT. According to a preferred embodiment, the epoxy film forming polymer compatible with said polyester matrix resin comprises 2 to 8 reactive epoxy groups per chain and is advantageously selected from epoxy phenol novolac EPN or epoxy cresol novolac ECN type resin or mixtures thereof.

The hypophosphite is selected among hypophosphite salts such as metal hypophosphites, alkaline earth metal hypophosphites, ammonium hypophosphite and mixtures thereof. Most preferred are sodium and potassium hypophosphite. The term hypophosphite as used herein is not meant to include esters of hypophosphorous acid. For the sake of clarity, it is emphasized that the term hypophosphite salt also includes the combination in the mixture of the hypophosphorous acid with a cation provider to form the corresponding salt.

It should be emphasized here that none of the prior art documents referred to above teaches the combinations now found to constitute the invention.

According to the invention, the sizing composition may be a multi-part sizing composition comprising a size composition and a binder composition, the hypophosphite being comprised in an amount of 5 to 30 w% of the total composition, preferably 7 to 25 w%, more preferably 10 to 20 w% and most preferably 12 to 18 w% of the total composition, wherein the size composition comprises the silane coupling agent, and the binder composition comprises the epoxy film forming polymer compatible with polyester matrix resin. The size composition may further comprise additional components, such as film forming polyurethanes, and/or surfactants and/or lubricants and/or other adjuvants commonly used in such sizing compositions. The binder composition may further comprise additional components, such as film forming polyurethanes, and/or surfactants and/or lubricants and/or other adjuvants commonly used in such binder compositions. The binder composition does not comprise any silane coupling agent. The hypophosphite may be included in the size composition and/or in the binder composition and/or constitute a third part of the sizing composition. A multi-part sizing composition according to the invention may be applied in multiple steps on the relevant matrix reinforcing charges, thus first applying the size composition comprising the coupling agent, for instance by kiss roll applicator or spraying, followed by application of the binder composition. Preferably, the hypophosphite is applied yet separately in a third step. It has been found that when applied as overcoat the effect of the hypophosphite is optimized.

For the sake of clarity, the words "sizing composition" are used throughout the description and claims to designate a composition for treatment of reinforcing charges. The words "size composition" are used throughout the description and claims to designate a part of a multi-part sizing composition. It has been found that the sizing composition of the invention provides improved properties to the thermoplastic polyester matrix resin reinforced with charges coated with the relevant sizing composition. The invention thus also relates to coated reinforcing charges, preferably mineral charges, more preferably glass fibers, and to a thermoplastic polyester matrix resin reinforced with charges, particulate or fibers, more preferably mineral charges, more specifically glass fibers, coated with a sizing composition of the invention. The improved mechanical property essentially consists in the elongation at break. The sizing composition of the invention further improves the matrix resistance to discoloration or staining. Finally, it has been found that fibers coated with the sizing composition of the invention show improved handling and processability because of a reduced tendency to form fuzz in pneumatic transport or feeding systems and because of reduced tendency to accumulate electrostatic charges. Electrostatically charged fiber segments further promote fuzz formation thereby affecting the transport or feeding systems. More particularly pneumatic feeding systems suffer from accumulated fuzz that may progressively obstruct feeding tubes, thus reducing the flow of fiber material with the result of irregular fiber feeding into the matrix polymer and/or reduced production speed. Furthermore, such inconveniences require regular and/or multiple interruption of the production equipment for maintenance purposes.

None of the above mentioned prior art discloses or suggests any sizing composition as herein described for treatment of reinforcing charges, more specifically mineral charges, preferably glass fibers, intended for use in thermoplastic polyester matrices, such as PET and PBT, that comprises a coupling agent, a film forming epoxy resin comprising reactive epoxy groups and a hypophosphite in an amount sufficient to have an antioxidant, staining-resistance effect as well as to improve the mechanical properties, more specifically the elongation at break, of the reinforced polyester matrix resin. Furthermore, no suggestion can be found in the above referenced prior art on how to improve the electrostatic behavior of fibers treated with a sizing composition comprising film forming epoxy polymers that enhance the compatibility between the reinforcing charges and the thermoplastic polyester matrix resin.

The above-mentioned advantages and other features of the invention will be further detailed and explained herein below with reference to attached figures and examples.

### Brief Description Of Drawings

The present invention will be explained in more details below, with reference to the following drawings:
- Fig. 1 is a schematic representation of an equipment designed to show static/antistatic properties;
- Fig. 2 shows the effect of addition of sodium hypophosphite on the Tensile Elongation at Break of normalized PBT samples.

### Detailed Description Of The Invention

The present invention relates to an aqueous sizing composition for reinforcing charges, comprising a silane coupling agent, an epoxy film forming polymer comprising 2 - 8 reactive epoxy groups per chain, said epoxy polymer being compatible with thermoplastic polyester matrix resin and a hypophosphite in an amount of 5 to 30 w% of the composition, preferably 7 to 25 w%, more preferably 10 to 20 w% and most preferably 12 to 18 w% of the composition.

Suitable silane coupling agents for use in the sizing compositions of the invention are advantageously selected from amino functional silanes, such as those available from Momentive, Dow Corning Inc, ShinEtsu, Gelest or Wacker, including but not limited to monoamino-silanes, amino-propyl-triethoxy-silane, gamma-amino-propyl-triethoxy-silane, amino-propyl-trimethoxy-silane, amino-propyl-methyl-dimethoxysilane, amino-propyl-methyl-diethoxy-silane, aminopropylsilsesquioxane, aminopropyl-diisopropyl-ethoxysilane, amino-propyl- dimethylethoxy-silane, amino-propyl-tris(methoxyethoxyethoxy)-silane, bis(trimethoxysilylpropyl)amine, aminobutyl-triethoxy-silane, butylaminopropyl-trimethoxysilane, aminoundecyl-triethoxy-silane, aminoneohexyl-trimethoxy-silane, aminoneohexyl-methyldimethoxy-silane, benzylamino-silane, N-phenyl-aminopropyl-trimethoxysilane, N-phenyl-aminomethyl-trimethoxysilane, aminohexyl-methyldimethoxy-silane, ethylaminoisobutyl-trimethoxy-silane, ethylaminoisobutyl-methyldiethoxy-silane, methylaminopropyl-trimethoxy-silane, methylaminopropyl-methyldimethoxy-silane, 3-(1,3-dimethylbutylidene)amino-propyltriethoxy-silane, phenylaminomethyl-methyldimethoxy-silane, phenylaminomethyl-triethoxy-silane, (N-allylamino)propyl-trimethoxy-silane, bis(hydroxyethyl)-aminopropyl-triethoxy-silane, diethylaminomethyl-triethoxy-silane, diethylaminopropyl-trimethoxy-silane, dimethylaminopropyl-trimethoxy-silane, N-ethyl-3-trimethoxysilyl-methylpropamine, cyclohexyl-amino-methyl-methyldiethoxy-silane, cyclo-hexyl-amino-propyl-trimethoxy-silane, cyclohexyl-amino-methyl-triethoxy-silane, trimethoxysilylpropyl-trimethylammonium chloride, octadecyldimethyl-(trimethoxysilylpropyl)ammonium chloride, N,N-didecyl-N-methyl-N-(trimethoxysilyl-propyl)-ammonium chloride, tetradecyldimethyl(trimethoxysilyl-propyl)-ammonium chloride, N-(trimethoxysilylethyl)-benzyl-N,N,N-trimethylammonium chloride, N-(trimethoxysilylpropyl)-isothiouronium chloride, bis(triethoxysilylpropyl)-amine, bis(trimethoxysilylpropyl)-amine, bis(methyldiethoxysilylpropyl)-amine, bis(methyldimethoxysilylpropyl)-N-methylamine, diamino-silanes, amino-ethyl-amino-propyl-trimethoxy-silane, amino-ethyl-amino-propyl-triethoxy-silane, amino-ethyl-amino-propyl-methyl-dimethoxy-silane, aminoethyl-aminopropyl-trimethoxysilane, aminoethyl-aminopropyl-triethoxysilane, aminoethyl-aminoisobutyl-methyldimethoxy-silane, aminoethyl-aminoisobutyl-dimethylmethoxy-silane" aminohexyl-aminomethyl-triethoxysilane, aminohexyl-aminopropyl-trimethoxysilane, aminoethyl-aminoundecyl-trimethoxysilane, (aminoethylaminomethyl)-phenylethyl-trimethoxysilane, N-(2-aminoethyl)-3-aminopropyl-silanetriol, bis[(trimethoxysilyl)propyl]-ethylenediamine, bis[(triethoxysilyl)propyl]-urea, N,N-dioctyl-N-triethoxysilylpropyl-urea, 3-(N-styrylmethyl-2-aminoethylamino)-propyl-trimethoxysilane hydrochloride, benzylaminoethyl-aminopropyl-trimethoxy-silane, triamino-silanes, diethylene-triamino-propyl-trimethoxy-silane, (trimethoxyetylpropyl)-diethylene-triamine, ureidopropyl-trimethoxy-silane, ureidopropyl-triethoxy-silane, 2-(4-pyridylethyl)-triethoxy-silane, 2-(2-pyridylethyl)thiopropyltrimethoxy-silane, 2-(4-pyridylethyl)thiopropyl-trimethoxy-silane, N-(3-triethoxysilylpropyl)-4,5-dihydroimidazole, acetamido-propyltrimethoxysilane, N-[5-(trimethoxysilyl)-2-aza-1-oxo-pentyl]caprolactam, N-allyl-aza-2,2-dimethoxysilacyclopentane, N-aminoethyl-aza-2,2,4-trimethylsilacyclopentane, N-(3-aminopropyl-dimethylsila)-aza-2,2-dimethyl-2-silacyclopentane, N-butyl-aza-2,2-dimethoxysilacyclopentane, 2,2-dimethoxy-1,8-diaza-2-silacyclooctane, N-methyl-aza-2,2,4-trimethylsilacyclopentane and polyazamide silylated aminosilane.

Other suitable coupling agents are organic epoxy silanes, advantageously selected from cycloaliphatic epoxy silanes, such as epoxycyclohexylethyltrimethoxysilane epoxycyclohexylethyltriethoxysilane, and glycidoxysilanes, such as gamma-glycidoxypropyltrimethoxy-silane, gamma-glycidoxypropyltriethoxysilane, gamma-glycidoxypropylmethyldimethoxysilane or gamma-glycidoxypropylmethyldiethoxysilane.

The composition of the invention may comprise one or more of the above mentioned coupling agents in an amount of from 1 to 20% by weight of total solids in the sizing composition, preferably 1 to 15 % by weight of total solids, more preferably 2 to 10 % by weight, most preferably 2 to 8 % by weight of total solids in the sizing composition.

Film forming epoxy resins comprising reactive epoxy groups, more specifically epoxy novolac type resins are known film formers compatible with polyester matrix resins such as PET and PBT. Preferred epoxy resins comprise 2 to 8 functional epoxy groups per chain and are advantageously selected from epoxy phenol novolac EPN type resins and epoxy cresol novolac ECN type resins and mixtures thereof. These materials are advantageously processable in water emulsions, preferably non-ionic emulsions. Commercial emulsions are available from Hexion, such as RSW-4254 (with a functionality of about 3.6) and EPI-REZ™ type resins, more preferably EPI-REZ-6006-W-70 with a functionality of about 6 and DPW-5108 with a functionality of about 8, and from Adeka, such as EM-0514 and EM-0517, and from Coim, such as Filco™ 345, 74005, 7801 and 7802. Other examples are Neoxil type aqueous emulsions of epoxy ester resins from DSM, such as Neoxil 962D, Neoxil 8294, Neoxil 4298 (a 55% epoxy-bis-phénol A type resin), EMX-063 which is an epoxy film former with a 55% non-volatile fraction and 6.3 epoxy functionality or EM-054, an epoxy film former with a 50% non-volatile fraction and 6.3 epoxy functionality, both from Adeka.

The film forming epoxy polymer, compatible with polyester matrix is present in the compositions of the invention in an amount ranging from 25 to 80 w% of the total composition, preferably 30 to 70 w%, more preferably 35 to 67 w%, most preferably 40 to 60 w% of the total composition.

The hypophosphite may be selected from hypophosphorous salt such as, metal hypophosphites, alkaline earth metal hypophosphites, ammonium hypophosphite and mixtures thereof or from the combination of hypophosphorous acid with relevant base to form such salts. Most preferred are sodium and potassium hypophosphite; sodium hypophosphite monohydrate being the most common product available on the market.

The compositions of the invention may further include film forming polymers such as polyurethanes. They are generally used to improve fiber integrity and their level is kept low in order not to substantially affect the mechanical properties of the matrix and/or final compound material. They are selected in order to enhance compatibility with the matrix resin, thus reducing potential negative effect on mechanical properties. Any type of polyurethane dispersion stable in the given pH range and having good film forming properties is suitable. Preferred polyurethane polymers are so-called polyether based or polyester based polyurethanes. Commercial polyether based polyurethanes are available from DIC (examples are 1050-NE, 1310NE, 8510, 1940NE, 2260NE, V3621, V3624, V3625 and V3626), from Adeka (HUX-280) and from Bayer (Baybond PU406; Baybond RSC 1187). Commercial polyester based polyurethanes are available from DIC (examples are 1640NE, 1672NE, 1980NE, HS-770, 2210, 2220, V3433, V3595), from Adeka (HUX-817 and HUX-830) and from Bayer (Baybond VLS-2277). They are advantageously comprised between 10 and 50 % by weight of the total composition, preferably between 10 and 40 w%, more preferably between 12 and 35 w%.

Compositions of the present invention may also include other adjuvants known to the person skilled in the art, such as lubricants, surfactants or surfactant mixtures or other materials like waxes. Suitable lubricants may include polyoxy-alkylene-amines as are available from Huntsman Corporation. Suitable surfactants preferably include non-ionic surfactants. Examples of such surfactants are octylphenol ethoxylate (e.g Triton X100 from Union Carbide), ethylene oxide/propylene oxide block copolymers of the Pluronic series available from BASF or of the Synperonic series available from ICI, or fluoroalkyl alcohol substituted polyethylene glycol. The skilled person will be able to adjust the composition with relevant concentrations of such products as lubricants and surfactants knowing that the purpose is to adapt the surface tension such as to reach a suitable wetting of the fibers, and further knowing that surfactants are already included in the relevant emulsions used to form the compositions of the invention.

The composition of the invention may further comprise one or more biocides for certain applications as may appropriately be selected by the skilled person.

The sizing composition may be prepared by addition of the relevant components in appropriate amounts simultaneously or in sequence, as the skilled person will best determine. It is generally preferred to add the relevant components into water to prepare the sizing composition. The relevant components are preferably already diluted in water before addition into the aqueous sizing composition.

The sizing composition may be applied in a manner known per se to the reinforcing charges, preferably fibers. Conventional methods include application by rolling, brushing and spraying. More specifically in the case of glass fibers, the sizing composition is advantageously applied to the fibers during their formation or the wet chopping operation. The amount of sizing composition applied to glass fibers generally ranges from 0.4 to 1.4 % by weight of glass charge calculated as LOI (loss on ignition) .

According to an alternative advantageous embodiment of the invention, the sizing composition may be a multi-part composition comprising a size composition which comprises the silane coupling agent, a binder composition which comprises the epoxy film forming polymer compatible with the polyester matrix resin but essentially no coupling agent, and a hypophosphite being comprised in an amount of 5 to 30 w%, preferably 7 to 25 w%, more preferably 10 to 20 w% most preferably 12 to 18 w% of the total combination. The hypophosphite may be included in the size composition and/or binder composition and/or as a separate component part of a multi-part sizing composition.

The size composition advantageously comprises a film forming polyurethane, preferably polyester or polyether based polyurethane. It improves the chopping of the fibers after treatment. It further tends to reduce the coupling agent's tendency to crosslink between fibers thus maintaining the fibers in bundles of individual fibers. A preferred polyether based PU is Baybond PU406; a preferred polyester based PU is Baybond VPLS2277.

These polymers are advantageously used as water emulsions or dispersion. The polyurethane is selected based on its compatibility with the matrix. It could be non-ionic or anionic if sufficiently stable in the formulation.

The binder composition advantageously also comprises a polyurethane polymer in order to enhance compatibility with the matrix resin, preferably as a non-ionic emulsion or anoinic dispersion. A preferred polyurethane polymer suitable for the binder composition consists in a polyester based polyurethane, such as Baybond VPLS2277.

When the sizing composition is a multi-part composition, the relevant parts may be prepared in a manner known in the art by addition into water in relevant proportions leading to the desired final sizing composition of the invention. It is within the skill of the relevant artisan to prepare such compositions of optimum quality under most advantageous conditions. The ratio between the different parts may vary as follows (in parts by weight):
- Size composition: 0.06 to 0.30 parts by weight of active solid on fibers
- Binder composition: 0.10 to 1.40 parts by weight of active solid on fibers
- Sodium hypophosphite: 0.125 to 0.25 parts by weight of active solid on fibers.

Total active solids on fibers may vary from 0.285 to 1.70 % by weight of fibers.

A multi-part sizing composition offers the advantage of allowing treatment of substrate in a more efficient manner but also with different components at different times and places in the production chain. The size composition may for instance advantageously be applied directly after fiber substrate formation, and preferably before the fibers are collected into strands, while the binder composition may be applied after chopping of the continuous fiber substrate, that is the strands. The size composition then is advantageously applied by any conventional means such as roll, dip-draw, slide or spray applicators. The sized strands may then be chopped into segments as is conventional in the art, and the binder composition may then be applied to the chopped segments which may for instance be pelletized in any suitable method known to the one skilled in the art, such as tumbling in a pelletizer, for instance a rotating drum equipped with a sprayer for the binder composition. It is also within the skill of the artisan knowledgeable in this art to adapt the pelletizing conditions, including humidity and temperature to the requirements of the final product to be obtained. Generally a drying step is required before the chopped fiber strands are stored prior to integration into a polymer matrix in the form of granules. The granules may then be melted in an injection machine for use in molding a reinforced composite article.

While the hypophosphite may be included in either of the size composition or the binder composition or in both, it is preferred if the said hypophosphite is applied as an overcoat after application of the binder composition to the fiber substrate, most preferably after drying of the fibers. In the alternative, the hypophosphite may be included in the size composition and/or in the binder composition and as a separate individual overcoat. The preferred embodiments have shown the best results with respect to the characteristics of the final reinforced product, that is resistance to staining, mechanical characteristics, including elongation at break, and antistatic positive effect. It has surprisingly been found that while humidity is known to reduce the mechanical properties of a fiber reinforced polyester resins, the presence of a certain degree of residual humidity resulting from the applied hypophosphite solution on the dried fibers goes with an increase of mechanical properties, more specifically tensile elongation at break, when a hypophosphite is used according to the invention.

When seeking to overcome some at least of the above mentioned problems, it has been found that the sizing compositions of the invention are particularly effective. Processability of the mineral charges, preferably glass fibers, has been significantly improved with reduced fuzz formation and reduced electrostatic charge accumulation.

The advantages of the compositions and other aspects of the present invention will become more apparent in the following Examples.

For the sake of clarity, LOI means Loss-on-Ignition. This definition is generally known to the skilled person and is used to measure the percentage of organic solid matter deposited on glass fiber surfaces. LOI is measured herein according to ASTM2854. Strictly speaking, the LOI definition does not include hypophosphite salts as these are generally not considered organic chemistry. Wishing to express the quantity of hypophosphite salt deposited on the glass fibers, the authors have included the quantity of hypophosphite salt into the LOI percentage, when appropriate.

In order to be able to include into the LOI percentage the percentage of hypophosphite salt deposited on the glass fibers, it was necessary to measure it. The authors have thus developed a conductivity based method to determine the quantity of hypophosphite salt deposited on the fibers. The method is explained hereafter with respect to sodium hypophosphite.

NaH2PO2.H2O is generally available as 50% aq solution. Its molecular weight is 106; the molecular weight of the anhydride is 88. Conductivity of several solutions with different concentrations of NaH2PO2.H2O was measured by different devices and different operators and a mean linear correlation established. In order to determine the % of salt monohydrate deposited on chopped fiber strands:
- Weight 20g (+/- 0.1 g) chopped fibers
- Add 80 g (+/- 0.1 g) demineralized water (Water conductivity checked to be lower than 10µs/cm)
- Stir manually and measure conductivity after at least 5 minutes by placing electrode in water above the fibers
- repeat the same exercise and take the average
- plotting the measured conductivity on the linear correlation established for sodium hypophosphite monohydrate indicates the % NaH2PO2.H2O added onto the fibers.

It had been found that certain prior art reinforcing fiber charges treated with sizing compositions comprising a silane coupling agent, polyether or polyester based polyurethane and an epoxy novolac type binder showed a tendency to fuzz formation, more specifically in pneumatic transport and feeding equipment. Fuzz formation increases the risk of filter clogging and requires increased maintenance.

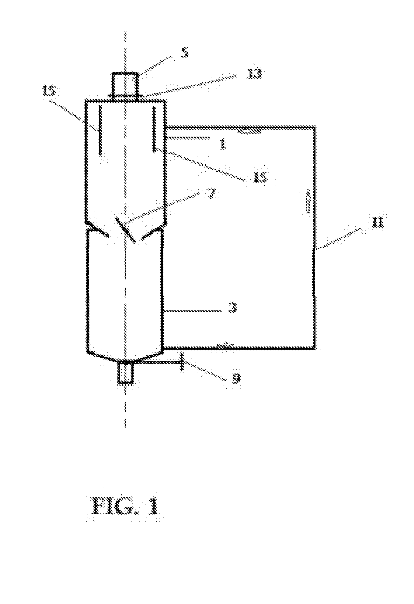

An equipment was designed in order to be able to evidence static/antistatic properties of treated glass fiber segments or pellets. The equipment is schematically represented in Fig. 1. It comprises an essentially cylindrical chute 1 arranged on top of, and leading vertically into, a fiber container 3. The top of chute 1 is equipped with a pump 5. A valve 7 is arranged in the connection between chute 1 and container 3. Another valve 9 is arranged in the bottom of container 3; it is normally closed and may be opened to empty container 3. Two opposite collector plates 15 of about 240 cm² are arranged vertically in chute 1. A flexible tube 11 with inner diameter of 50 mm and a length of about 188 cm is connected between the slightly conical bottom of container 3 and the top of conical chute 1, in the area of the collector plates 15. The whole inner circuit is essentially airtight. A filter 13 is arranged between the top of chute 1 and the pump 5.

A load of 2.5 kg of chopped coated glass fiber pellets to be tested was charged from the top, into container 3, chute 1 unmounted, valve 9 closed. Chute 1 was then tightly fixed on top of container 3. An electric tension of approximately 80 V continuous is applied between opposite collector plates. The pump is then operated in 50 cycles, during 15 min, as follows: the pump is operated; the fiber pellets are sucked through flexible tube 11 from bottom of container 3 and dropped into top of chute 1 between the two collector plates 15, valve 7 closed; when container 3 is essentially empty, the aspiration is stopped and valve 7 is opened thus allowing the accumulated fiber pellets to fall into container 3 again; the cycle is repeated 50 times. During this process, fuzz accumulates on filter 13 that filters the air prior to evacuation to the environment and statically loaded material accumulates on the collector plates 15. Further fuzz may accumulate on the walls of the flexible tube and of the whole equipment. Fuzz accumulated on the filter, tube wall and on the collector plates may be weighted, thus giving a measure of fuzz formation and static/antistatic properties. A Rothschild Static Voltmeter R-4021 was used to measure the alternating static voltage, the amplitude of which varies with charge variations at the measuring input.

Without being bound by theory, it is believed that the presence of hypophosphite as per the invention regulates remaining moisture on fiber to a level that participates in procuring the advantageous characteristics of the invention, like the anti-static effect and the mechanical characteristics including more specifically tensile elongation at break. This is the more surprising as the presence of water is known to reduce polyester molecular weight and hence its mechanical properties.

### EXAMPLES

### Example 1 : Preparation of a size composition

The components of a size composition for use in accordance with the present invention are set forth in Table 1 below.

**Table 1**

| Material | Kg/1000L | Solid content |
|---|---|---|
| A1100 | 10.345 | 58% * |
| PU406 | 46.377 | 34.5% |
| water | Add up to 1000 L | |

| | | |
|---|---|---|
| A1100 is an amino-propyl-triethoxy-silane coupling agent Baybond PU406 (Bayer product) is a polyether based polyurethane * understood to mean silane active solid partially condensed after hydrolysis | | |

A first polyurethane premix was prepared by diluting at ambient temperature in a first container 46.377 kg PU406 in water. A second premix was prepared by diluting at ambient temperature 10.345 kg of an amino-propyl-triethoxy-silane coupling agent in a second container in water and stirring for approximately 30 minutes. The contents of both containers were then combined and the volume brought to 1000 L by addition of water.

### EXAMPLE 2: Preparation of an alternative size composition

The components of an alternative size composition for use in accordance with the present invention are set forth in the following Table 2.

**Table 2**

| Material | Kg/1000L | Solid content |
|---|---|---|
| A1100 | 10.700 | 58% * |
| K-12 | 0.500 | 88.8% |
| FS-300 | 0.339 | 40% |
| water | Add up to 1000 L | |

| | | |
|---|---|---|
| A1100 is an amino-propyl-triethoxy-silane coupling agent K12 is a cationic softener comprising an acetic acid salt of the reaction product of ethylene pentamine and stearic acid Zonyl FS-300 is a fluoroalkyl alcohol substituted polyethylene glycol wetting agent * understood to mean silane active solid partially condensed after hydrolysis | | |

The individual components were advantageously diluted under agitation in water at ambient temperature and were then combined in a main tank under stirring and the total volume of the size composition was brought to 1000 L by addition of water. It is noted that this composition contains no polyurethane or other film forming agent.

### EXAMPLE 3: Preparation of a binder composition

A binder composition was prepared with the components of Table 3 below.

**Table 3**

| Material | Kg/100L | Solid content |
|---|---|---|
| Nx962D | 20.9 | 40% |
| Nx8294 | 15.1 | 55% |
| EMX-063 | 15.1 | 55% |
| NaH2PO2.H2O | 6.0 | 100% (as received) |
| water | Add up to 100 L | |

Neoxil 962D is a non-ionic aqueous emulsion of an epoxy-ester resin (DSM)

Neoxil 8294 is a non-ionic aqueous emulsion of a flexible epoxy-ester resin (DSM)

EMX-063 is a non-ionic aqueous emulsion of an epoxy film former with a 55% non-volatile fraction and 6.3 epoxy functionality

The above cited polymer emulsions were mixed under stirring at ambient temperature and the relevant amount of sodium hypophosphite pre-diluted was added and the total volume brought to 100 liters, thus with a total solids content of 31%.

### EXAMPLE 4: Sizing of glass fibers

Advantex E-type glass was molten and fibers were formed by drawing filaments through a die plate. Drawing speed and die opening are selected in order to produce fibers having an average diameter of about 10 µm. A sizing composition comprising a combination of the size composition of Example 1 and the binder composition of Example 3 in a ratio of 10 L of size of Example 1 with approx. 3.3 L of binder of Example 3, was then applied by a conventional kiss roll on the filaments produced and cooled by water vapor, at a temperature of approx. 25°C, before same were gathered into strands and chopped into segments of desired length and dried for later use in PBT articles. The fibers thus obtained conferred particularly good mechanical properties, more specifically good tensile elongation at break, to a sample of PBT comprising 30 w% of glass fibers. In addition, the chopped fiber segments were less prone to electro-static charging and showed a much reduced tendency to fuzz formation.

### EXAMPLE 5: Sizing of glass fibers with a two-part sizing composition

The advantages of the present invention will become even more apparent with a multi-part sizing composition applied in accordance with the invention.

The size composition of Example 1 was applied to E-type glass fibers as produced in a continuous process, at the exit of a conventional die plate, after cooling at a temperature of approx. 25°C, with a conventional kiss-roll applicator. The size composition was applied at a rate such as to achieve a strand total LOI (Loss on Ignition) of 0.22% solid on the glass fibers. Residual humidity was controlled at about 10 to 13 % of the weight of the coated glass.

The glass fibers were then collected into strands and chopped into segments of desired length according to a conventional manufacturing process. The chopped segments were dried and conveyed to a pelletizer in which the binder composition of Example 3 has been applied by spraying at a rate such as to achieve 0.17 w% sodium hypophosphite anhydride (or 0.2 w% sodium hypophosphite monohydrate) on the treated fibers. Glass fiber segment pellets were thus formed and conveyed to a fluidized bed dryer and dried to a residual moisture content of approx. 0.05%.

The fibers thus obtained conferred particularly good mechanical properties, more specifically good tensile elongation at break, to a sample of PBT comprising 30 w% of glass fibers. In addition, the chopped fiber segments were less prone to electro-static charging and showed much reduced tendency to fuzz formation. These characteristics are of enormous advantage in handling such fiber segments prior to incorporation into appropriate resin material, such as PBT.

### EXAMPLE 6: Preparation of a three-part sizing composition and sizing of glass fibers therewith

In the course of a conventional glass fiber manufacturing process, a size composition as per Example 1 was applied by a conventional kiss roll applicator after fiber formation (average diameter of about 10 µm) through a conventional die plate and cooling, as described in Example 5. The size composition was applied at a rate such as to achieve a strand total LOI (Loss on Ignition) of 0.22% solid on the glass fibers. The residual humidity at that stage was about 10 to 13 w% of the weight of the coated glass.

The glass fibers were then collected into strands and chopped into segments of desired length according to a conventional manufacturing process. The chopped segments were conveyed to a pelletizer in which a binder composition prepared as per example 3 but without sodium hypophosphite, with the following components:
- 20.9 kg NX 962 (at 40 w% solid)
- 15.1 kg NX8294 (at 55 w% solid)
- 15.1 kg EMX-063 (at 55w% solid)
- Water to add up to a total volume of 100 L
was applied by spraying at a rate such as to achieve 1 % LOI on the fibers. The thus treated fibers are then transported on a conveyor belt into a dryer for drying and curing the treated fibers. Residual moisture content was set at approx. 0.05%. After this drying step, the fiber segments were sprayed with a 50% solution of sodium hypophosphite monohydrate, thus applying a rate of 0.2 w% LOI monohydrate (or 0.17 w% LOI sodium hypophosphite anhydride) onto the fibers. The residual moisture content was approx. 0.2%.

The fibers thus obtained conferred particularly good mechanical properties, more specifically a good tensile elongation at break, to a sample of PBT comprising 30 w% of glass fibers. The advantageous antistatic properties noticed before were most pronounced when working according to this process as compared to the results obtained according to Example 5.

### EXAMPLE 7: Further three part sizing compositions

Further exemplary sizing compositions are illustrated in Table 4 below.

**Table 4**

| material | Comp G | Comp H | Comp I |
|---|---|---|---|
| Size Ex1 at | 0.22% LOI | 0.22% LOI | 0.22% LOI |
| Binder(100L) | 0.78 % LOI | 0.78% LOI | 0.78% LOI |
| -Nx962D | | 20.87 kg | |
| -Nx8294 | 15.20 kg | 15.20 kg | |
| -EM-054 | 16.70 kg | | |
| -Hexion4254 | | 13.40 kg | |
| -NX4298 | 15.20 kg | | |
| -FILCO 345 | | | 45.70 kg |
| -water | to 100 L | to 100 L | to 100 L |
| NaH2PO2.H2O | 0.2% LOI | 0.2% LOI | 0.2% LOI |

Neoxil 962D is a 40% non-ionic aqueous emulsion of an epoxy-ester resin (DSM)

Neoxil 8294 is a 55% non-ionic aqueous emulsion of a flexible epoxy-ester resin (DSM)

EM-054 is a non ionic emulsion of epoxy film former with a 50% non-volatile fraction and 6.3 epoxy functionality, from Adeka Hexion RSW-4254 is a 62 w% non-ionic multifunctional epoxy novolac resin dispersion by Hexion Specialty Chemicals.

Neoxil 4298 is 55% non-ionic aqueous emulsion of an epoxy bis phenol A type resin with Tg of 30°C (DSM)

Filco 345 is a 55 w% non-ionic epoxy novolac EPN resin emulsion by Coim spa

The size composition of Example 1 was applied to the drawn Advantex E-glass fibers as described above, at a rate of 0.22 % LOI. The binder composition (prepared with the concentrations of constituents as indicated in Table 4 above) was applied on chopped fiber strands in a pelletizer as described earlier above at a rate such as to achieve the indicated % LOI on glass fibers. The sodium hypophosphite monohydrate was applied at the indicated %LOI after drying of the chopped and pelletized fiber strands.

### EXAMPLE 8: Further three part sizing compositions

Further exemplary sizing compositions are illustrated in Table 5 below.

**Table 5**

| | Comp A | Comp B | Comp L | Comp M | Comp N | Comp O |
|---|---|---|---|---|---|---|
| Size Ex1 | at 0.22% LOI | 0.22% LOI | 0.22% LOI | 0.22% LOI | 0.22% LOI | 0.22% LOI |
| Binder (100 L) | at 0.67% LOI | 0.67% LOI | 0.78% LOI | 0.78% LOI | 0.78% LOI | 0.67% LOI |
| -Nx962D | | | 16.63 kg | 16.63 kg | 12.4 kg | |
| -Nx8294 | | | 12.13 kg | 12.13 kg | 9.0 kg | |
| -EMX063 | | | 13.3 kg | | | |
| -Filco 345 | | 26.13kg | | | | 29.4 kg |
| -Hx4254 | 26.00kg | | | 12.13 kg | 9.0 kg | |
| -1037 | | | | | 8.3 kg | |
| -FS300 | 0.0067 kg | 0.0067kg | .005667kg | 0.0053 kg | 0.0053 kg | 0.0067 kg |
| -2277 | 5.667 kg | 5.667kg | | | | 3.8667 kg |
| -water | to 100 L | to 100 L | to 100 L | to 100 L | to 100 L | to 100 L |
| NaH2PO2 .H2O | 0.2% LOI | 0.2% LOI | 0.2% LOI | 0.2% LOI | 0.2% LOI | 0.2% LOI |

Neoxil 962D is a 40% non-ionic aqueous emulsion of an epoxy-ester resin (DSM)

Neoxil 8294 is a 55% non-ionic aqueous emulsion of a flexible epoxy-ester resin (DSM)

EMX063 is non-ionic emulsion from Adeka of a epoxy film former with a 55% non-volatile fraction and 6.3 epoxy functionality Filco 345 is a 55 w% non-ionic epoxy novolac EPN resin emulsion by Coim spa

Hexion RSW-4254 is a 62 w% non-ionic multifunctional epoxy novolac resin dispersion by Hexion Specialty Chemicals.

RESYN 1037 is a non-ionic silane modified vinyl acetate copolymer emulsion with 55w% solids (Vinamul Polymers)

Zonyl FS-300 is a 40% fluoroalkyl alcohol substituted polyethylene glycol wetting agent

Baybond VPLS 2277 is a 40.5% emulsion of a polyester based polyurethane (Bayer)

The size composition of Example 1 was applied to the drawn Advantex E-glass fibers as described above, at a rate of 0.22 % LOI. The binder composition (prepared with the concentrations of constituents as indicated in Table 5 above) was applied on chopped fiber strands in a pelletizer as described earlier above at a rate such as to achieve the indicated % LOI on glass fibers. The sodium hypophosphite monohydrate was applied at the indicated %LOI after drying of the chopped and pelletized fiber strands.

### EXAMPLE 9: Further three part sizing compositions

Further exemplary sizing compositions are illustrated in Table 6 below.

**Table 6**

| | C1 | C2 | C3 | C4 | C5 | C6 | C7 | C8 | C9 |
|---|---|---|---|---|---|---|---|---|---|
| Size Ex2 at | 0.06 %LOI | 0.06 %LOI | 0.06 %LOI | 0.06 %LOI | 0.06 %LOI | 0.06 %LOI | 0.06 %LOI | 0.06 %LOI | 0.06 %LOI |
| Binder (100L) | 0.99 %LOI | 0.99 %LOI | 0.99 %LOI | 0.73 %LOI | 0.99 %LOI | 0.99 %LOI | 0.99 %LOI | 0.99 %LOI | 0.99 %LOI |
| -Nx962D | 17.5 kg | 16.4 kg | 15.4 kg | 20.8 kg | 15.4 kg | 15.4 kg | 15.4 kg | 8.7 kg | |
| -Nx8294 | 12.7 kg | 11.9 kg | 11.2 kg | 15.2 kg | 11.2 kg | 11.2 kg | 11.2 kg | 12.7 kg | 19.0 kg |
| -2277 | 9.9 kg | 13.0 kg | 16.0 kg | | 14.5 kg | | | 9.9 kg | 9.9 kg |
| -EM-054 | 14.0 kg | 13.1 kg | 12.3 kg | 16.7 kg | 12.3 kg | 12.3 kg | 12.3 kg | 21.0 kg | 21.0 kg |
| -RSC825 | | | | | 1.7 kg | | 1.7 kg | | |
| -RSC1187 | | | | | | 13.1 kg | 11.9 kg | | |
| -water | To 100L | To 100L | To 100L | To 100L | To 100L | To 100L | To 100L | To 100L | To 100L |
| NaH2PO2. H2O at | 0.2 %LOI | 0.2 %LOI | 0.2 %LOI | 0.2 %LOI | 0.2 %LOI | 0.2 %LOI | 0.2 %LOI | 0.2 %LOI | 0.2 %LOI |

Neoxil 962D is a 40% non-ionic aqueous emulsion of an epoxy-ester resin (DSM)

Neoxil 8294 is a 55% non-ionic aqueous emulsion of a flexible epoxy-ester resin (DSM)

Baybond VPLS 2277 is a 41% emulsion of a polyester based polyurethane

EM-054 is an epoxy film former with a 50% non-volatile fraction and 6.3 epoxy functionality, from Adeka

Baybond RSC 825 is 35 w% PU crosslinker blocked by caprolactame, available from Bayer

Baybond RSC 1187 is 50 w% polyether/polycarbonate based polyurethane by Bayer

The size composition of Example 2 was applied to the drawn Advantex E-glass fibers as described above, at a rate of 0.06 % LOI. The binder composition (prepared with the concentrations of constituents as indicated in Table 4 above) was applied on chopped fiber strands in a pelletizer as described earlier above at a rate such as to achieve the indicated % LOI on glass fibers. The sodium hypophosphite monohydrate was applied at a rate of 0.2 % LOI after drying of the chopped and pelletized fiber strands.

### EXAMPLE 10: Preparation of Test Samples and Mechanical properties

Chopped glass fiber segments with an average diameter of approximately 10 µm and an average length of about 4.5 mm were pelletized, dried and sized in accordance with the invention with the following compositions:
- Prior art composition;
- Compositions A of Example 8,
- Composition B of Example 8.

The prior art composition comprised a size composition as per Example 2 at 0.06 % LOI and a binder composition at 0.99 % LOI comprising 44.65 kg Neoxil 962, 32.47 kg Neoxil 8294, 10.45 kg Baybond VPLS 2277 and water to add up to 100 L. No NaH2PO2.H2O was added.

The above compositions were compounded with PBT Ultradur B4520 (by BASF) resin in a twin screw extruder ZSK26 Mc (by Coperion) at a throughput of 30 and 80 kg/h. In order to achieve the respective throughput, the rotation speed was set at about 300 rpm and at about 1000 rpm, respectively, thus achieving a torque of about 80% of maximum torque. The recorded melt temperature of the resin was 270-300 °C. The glass fiber pellets and the resin were fed at a rate such as to achieve a 30 w% glass loading in the extruded product. The extrudate was a glass fiber reinforced composite rod having a diameter of approx. 2.5 mm. The extrudate rod was cooled in a 2 m, long water bath set at 50°C following immediately the extrusion die. The extrudate strand was then chopped in 3.4 mm length in order to form granules.

The thus produced granules were then fed to an injection molding equipment, Arburg 420C All Rounder 800-250 equipped with an Axxicon ISO normalized mold, in order to produce standardized test samples as required for the following standard tests:
- Tensile strength, modulus, elongation at break according to ISO 527-4/1/5
- Unnotched Charpy impact strength according to ISO 179-1/1Eu,
- Notched Charpy impact strength according to ISO 179-1/1Ea,
- Notched Izod impact test according to ISO 180/A,
- Color parameters on Minolta 508 according to ASTM D1925;

The injection speed was set at 30 ccm/s, at a temperature of between 275 and 230°C with a mold temperature controlled at 80°C. The injection pressure was recorded as follows:

**Table 7**

| Test sample code | Coating/throughput | Injection pressure |
|---|---|---|
| 1 | Prior art/30 kg/h | 1138 bar |
| 2 | Prior art/80 kg/h | 658 |
| 3 | Comp A/30 kg/h | 1143 |
| 4 | Comp A/80 kg/h | 716 |
| 5 | Comp B/30 kg/h | 1119 |
| 6 | Comp B/80 kg/h | 695 |

The thus produced samples (dry as molded) were left to catch the laboratory temperature for 48 hours at 23 °C in a closed vessel

The samples thus produced were then used in the following tests performed at a room temperature of 23 °C and relative humidity of 40%.

### Unnotched Charpy Test

| Test sample | Av glass % | samples tested | Mean KJ/m2 | Stand dev |
|---|---|---|---|---|
| 1 | 30.11 | 10 | 79.163 | 1.664 |
| 2 | 29.92 | 10 | 74.729 | 2.574 |
| 3 | 29.83 | 10 | 81.786 | 3.213 |
| 4 | 29.79 | 10 | 73.985 | 3.703 |
| 5 | 29.97 | 10 | 78.261 | 3.240 |
| 6 | 29.93 | 10 | 74.758 | 2.618 |

### Notched Charpy Test

| Test sample | samples tested | Mean KJ/m2 | Stand dev |
|---|---|---|---|
| 1 | 10 | 10.505 | 0.335 |
| 2 | 10 | 9.360 | 0.417 |
| 3 | 10 | 10.723 | 0.590 |
| 4 | 10 | 9.319 | 0.282 |
| 5 | 10 | 10.893 | 0.526 |
| 6 | 10 | 8.847 | 0.454 |

### Notched Izod Test

| Test sample | samples tested | Mean KJ/m2 | Stand dev |
|---|---|---|---|
| 1 | 10 | 11.965 | 0.718 |
| 2 | 9 | 9.295 | 0.340 |
| 3 | 10 | 12.157 | 0.619 |
| 4 | 10 | 9.422 | 0.332 |
| 5 | 10 | 11.724 | 0.428 |
| 6 | 10 | 9.037 | 0.309 |

### Tensile Strength Test

| Test sample | samples tested | Mean MPa | Stand dev |
|---|---|---|---|
| 1 | 5 | 136.200 | 0.339 |
| 2 | 5 | 139.380 | 0.327 |
| 3 | 5 | 132.720 | 0.444 |
| 4 | 5 | 135.760 | 0.288 |
| 5 | 5 | 132.000 | 0.235 |
| 6 | 5 | 135.880 | 0.239 |

### Tensile Modulus

| Test sample | samples tested | Mean MPa | Stand dev |
|---|---|---|---|
| 1 | 5 | 10587 | 490 |
| 2 | 5 | 10341 | 466 |
| 3 | 5 | 9722 | 106 |
| 4 | 5 | 9943 | 118 |
| 5 | 5 | 9649 | 85 |
| 6 | 5 | 9753 | 116 |

### Tensile Elongation at Break

| Test sample | samples tested | Mean % | Stand dev |
|---|---|---|---|
| 1 | 5 | 3.4920 | 0.3104 |
| 2 | 5 | 3.5200 | 0.0752 |
| 3 | 5 | 4.2120 | 0.0756 |
| 4 | 5 | 4.0160 | 0.1097 |
| 5 | 5 | 4.2660 | 0.1566 |
| 6 | 5 | 3.9380 | 0.1441 |

Length of fibers were found to be consistently within the range of 250 - 260 µm.

### Color parameters

| Test sample | Yellowing index |
|---|---|
| | ASTM D1925 |
| 1 | 21.71 |
| 2 | 24.42 |
| 3 | 13.91 |
| 4 | 17.63 |
| 5 | 10.66 |
| 6 | 15.69 |

### EXAMPLE 11: Effect of sodium hypophosphite on Tensile Elongation at Break of PBT samples

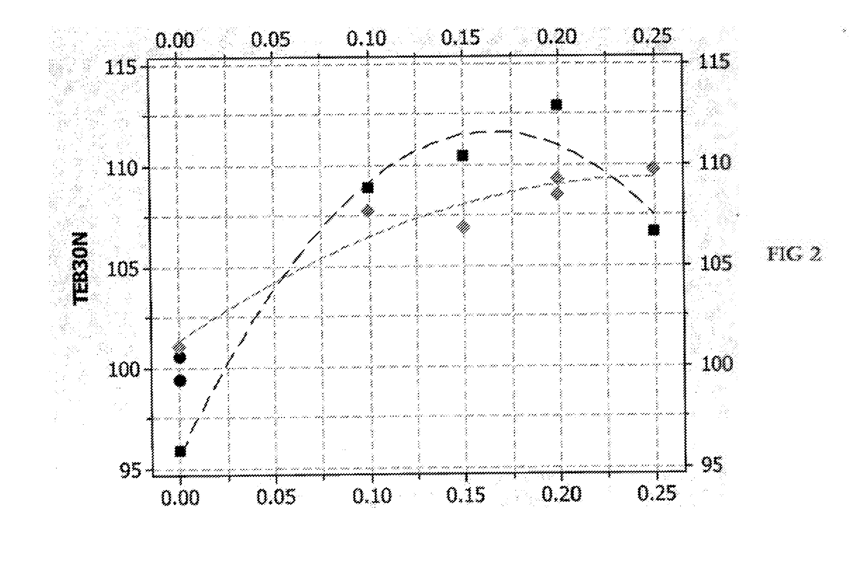

When studying the addition of sodium hypophosphite to sizing compositions, it has been found that the Tensile Elongation at Break of PBT samples reinforced with such sized glass fibers evolves according to the curve of Figure 2, with a maximum between about 0.15 and 0.25 % LOI (sodium hypophosphite monohydrate) on fibers.

Standard test sample preparation has been described in Example 10. The reinforced PBT resin used is the same as the one used in Example 10. The concentration of sodium hypophosphite monohydrate has been varied between 0 and 0.25 % LOI on the fibers.
• represents the tensile elongation at break of a normalized PBT sample reinforced with 30% glass fibers (TEB30N) sized with the prior art composition of Example 10;
■ represents the variation of the tensile elongation at break of a normalized PBT sample reinforced with 30% glass fibers sized with the invention composition X as a function of varying hypophosphite content in %LOI; and
◇ represents the variation of the tensile elongation at break of a normalized PBT sample reinforced with 30% glass fibers sized with the invention composition Y as a function of varying hypophosphite concentration in %LOI.

### Invention composition X :

- Size applied at 0.21 %LOI
   o A187 (as received) 5.04 kg
   o Acetic acid to adapt pH to 4
   o Water to add up to 100 l
- Binder applied at 0.84 %LOI
   o Neoxil 962D 16.9 kg
   o Neoxil 8294 12.3 kg
   o EM-054 13.5 kg
   o VPLS 2277 26.3 kg
   o Water to add up to 100 l
- Hypophosphite: varying concentrations

### Invention composition Y:

- Size applied at 0.1664 %LOI
   o A1100 (as received) 0.2 kg
   o K12 0.01 kg
   o Zonyl FS300 0.006 kg
   o VPLS 2277 0.55 kg
   o Water to add up to 100 l
- Binder applied at 0.84 %LOI
   o Neoxil 962D 19.57 kg
   o Neoxil 8294 14.24 kg
   o EM-054 15.66 kg
   o VPLS 2277 3.73 kg
   o Water to add up to 100 l
- Hypophosphite: varying concentrations

### EXAMPLE 12: Preparation Of Test Samples And Properties

Chopped glass fiber segments with an average diameter of approximately 10 µm and an average length of about 4.5 mm were pelletized, dried and sized in accordance with the invention with the following compositions:
- Prior art composition ref A;
- Prior art Composition ref B
- Invention sample 3
- Invention sample 4
- Invention sample 5

The prior art composition comprised a size composition as per Example 2 at 0.06 % LOI and a binder composition at 0.99 % LOI comprising 44.65 kg Neoxil 962, 32.47 kg Neoxil 8294, 10.45 kg Baybond VPLS 2277 and water to add up to 100 L. No NaH2PO2.H2O was added. Advantex glass fibers were sized with the prior art composition and compounded with PBT; samples were taken from the beginning of the compounding trial, " Ref A", and from the end of the compounding trial, "Ref B".

Invention samples 3, 4 and 5 correspond to three different Advantex glass fiber production batches obtained after sizing with composition A of Example 8.

The above treated glass fibers were compounded with PBT Ultradur B4520 (from BASF) resin in a twin screw extruder ZSK26 Mc (by Coperion) at a throughput of 30 and 80 kg/h. In order to achieve the respective throughput, the rotation speed was set at about 300 rpm and at about 1000 rpm, respectively, thus achieving a maximum torque of about 80% of the maximum admissible torque of the machine. The recorded melt temperature of the resin was about 270°C and 300 °C, respectively, for 30 and 80 kg/h throughput. The glass fiber pellets and the resin dried for 10 hours at 140 °C in a Motan air drier (molecular sieve dried air) were fed at a rate such as to achieve a 30 w% glass loading in the extruded product. The extrudate was a glass fiber reinforced composite rod having an average diameter of approx. 2 mm. The extrudate rod was cooled in a 2 m long water bath regulated at 50°C following immediately the extrusion die. The extrudate strand was then chopped in 3.4 mm length in order to form granules.

The thus produced granules were then fed to an injection molding equipment, Arburg 420C All Rounder 800-250 equipped with an Axxicon ISO normalized mold, in order to produce standardized test samples as required for the standard tests. The injection speed was set at 30 ccm/s, at a temperature of between 275 and 230°C with a mold temperature controlled at 80°C. The injection pressure was recorded as follows:

**Table 8**

| Test sample code | Coating/throughput | Injection pressure |
|---|---|---|
| 498 | Prior art ref A/30 kg/h | 1122 |
| 499 | Invention 3/30 kg/h | 1139 |
| 500 | Invention 4/30 kg/h | 1140 |
| 501 | Invention 5/30 kg/h | 1141 |
| 502 | Prior art ref B/30 kg/h | 1110 |
| 503 | Prior art ref A/80 kg/h | 673 |
| 504 | Invention 3/80 kg/h | 697 |
| 505 | Invention 4/80 kg/h | 702 |
| 506 | Invention 5/80 kg/h | 681 |
| 507 | Prior art ref B/80 kg/h | 720 |

The thus produced samples (dry as molded) were left to take the laboratory condition for 48 hours at 23 °C in a closed vessel.

The samples thus produced were then used in the following tests performed at a room temperature of 23 °C and relative humidity of 46% for tensile strength and 39% for impact tests.

### Unnotched Charpy Test (ISO 179-2/eU)

| Test sample | Av glass % | samples tested | Mean KJ/m2 | Stand dev |
|---|---|---|---|---|
| 498 | 29.79 | 10 | 70.628 | 2.326 |
| 499 | 29.81 | 10 | 73.019 | 4.883 |
| 500 | 29.75 | 10 | 75.283 | 2.835 |
| 501 | 29.59 | 10 | 74.847 | 3.733 |
| 502 | 30.21 | 10 | 68.110 | 1.290 |
| 503 | 29.73 | 10 | 63.254 | 4.155 |
| 504 | 29.63 | 10 | 66.989 | 2.071 |
| 505 | 29.71 | 10 | 65.158 | 3.347 |
| 506 | 29.79 | 10 | 65.117 | 4.668 |
| 507 | 29.22 | 10 | 59.712 | 5.843 |

### Notched Charpy Test (ISO 179-1/1eA)

| Test sample | samples tested | Mean KJ/m2 | Stand dev |
|---|---|---|---|
| 498 | 10 | 8.1980 | 0.6543 |
| 499 | 10 | 7.8630 | 0.5464 |
| 500 | 10 | 7.7960 | 0.7950 |
| 501 | 10 | 7.9450 | 0.7513 |
| 502 | 10 | 9.0150 | 0.6945 |
| 503 | 10 | 7.8990 | 0.3939 |
| 504 | 10 | 7.3910 | 0.2930 |
| 505 | 10 | 7.4060 | 0.3694 |
| 506 | 10 | 7.3740 | 0.4184 |
| 507 | 10 | 7.7140 | 0.4474 |

### Notched Izod Test (ISO 180-1/A)

| Test sample | samples tested | Mean KJ/m2 | Stand dev |
|---|---|---|---|
| 498 | 9 | 9.2844 | 0.3853 |
| 499 | 10 | 9.5370 | 0.6852 |
| 500 | 10 | 9.2970 | 0.5967 |
| 501 | 10 | 9.2710 | 0.6562 |
| 502 | 10 | 9.6610 | 0.6541 |
| 503 | 10 | 7.7510 | 0.2084 |
| 504 | 10 | 7.1630 | 0.1766 |
| 505 | 10 | 7.2440 | 0.1961 |
| 506 | 9 | 7.5400 | 0.4227 |
| 507 | 10 | 7.5361 | 0.3676 |

### Tensile Strength Test

| Test sample | samples tested | Mean MPa | Stand dev |
|---|---|---|---|
| 498 | 9 | 139.278 | 0.222 |
| 499 | 10 | 135.610 | 0.288 |
| 500 | 10 | 134.310 | 0.515 |
| 501 | 10 | 133.940 | 0.324 |
| 502 | 10 | 138.490 | 0.277 |
| 503 | 10 | 146.420 | 0.215 |
| 504 | 10 | 140.070 | 0.254 |
| 505 | 10 | 138.790 | 0.367 |
| 506 | 10 | 139.320 | 0.305 |
| 507 | 10 | 141.890 | 0.502 |

### Tensile Modulus

| Test sample | samples tested | Mean MPa | Stand dev |
|---|---|---|---|
| 498 | 9 | 10085.0 | 71.3 |
| 499 | 10 | 9875.5 | 73.6 |
| 500 | 10 | 9782.6 | 81.2 |
| 501 | 10 | 9678.4 | 61.4 |
| 502 | 10 | 10047.9 | 69.8 |
| 503 | 10 | 10307.0 | 100.1 |
| 504 | 10 | 10126.8 | 67.7 |
| 505 | 10 | 10075.1 | 68.9 |
| 506 | 10 | 10052.6 | 79.4 |
| 507 | 10 | 9984.3 | 92.4 |

### Tensile Elongation at Break (ISO 527-4/1/5)

| Test sample | samples tested | Mean % | Stand dev |
|---|---|---|---|
| 498 | 9 | 3.3667 | 0.1108 |
| 499 | 10 | 4.1330 | 0.1152 |
| 500 | 9 | 4.1478 | 0.1440 |
| 501 | 10 | 4.1570 | 0.1083 |
| 502 | 10 | 3.3660 | 0.1569 |
| 503 | 10 | 2.9580 | 0.0742 |
| 504 | 10 | 3.3600 | 0.1112 |
| 505 | 10 | 3.4150 | 0.1038 |
| 506 | 9 | 3.2989 | 0.0715 |
| 507 | 10 | 2.8140 | 0.1842 |

Length of fibers were found to be consistently within the range of 270 - 330 µm.

### Fuzz evaluation

Initial loads of 2.5 kg chopped coated glass fiber pellets treated with different compositions were charged from the top, into container 3, chute 1 unmounted, valve 9 closed. Chute 1 was then tightly fixed on top of container 3. An electric tension of approximately 80 V continuous was applied between opposite collector plates. The pump was operated in 50 cycles, during 15 min. During this process, fuzz accumulates on filter 13 that filters the air prior to evacuation to the environment and statically loaded material accumulates on the collector plates 15. Fuzz accumulated on the filter and on the collector plates was collected manually and each time weighted and computed as a percentage of the initial 2500 g loaded into the apparatus, thus giving a measure of fuzz formation and static/antistatic properties.

In addition, static voltage was measured by a Rothschild Static Voltmeter R-4021 and plotted in a diagram.

For evaluation of fuzz formation, ambient temperature and relative humidity are of significant importance and are thus shown as recorded in the relevant tables below.

**Table 9**

| sample | Fuzz on Filter g | Fuzz on Wall g | Fuzz tot % | Static V max | Static Mean V | °C/%RH |
|---|---|---|---|---|---|---|
| Pr art | 11.5 | 2.5 | 0.56 | 49.5 | 13.7 | 23.7/31 |
| Pr art | 13.9 | 2.3 | 0.65 | 66.1 | 32.6 | 23.7/31 |
| Inv 3 | 16.8 | 0.6 | 0.70 | 26.8 | 15.8 | 24.0/32 |
| Pr art | 15.4 | 2.8 | 0.73 | 45.0 | 22.8 | 24.1/34 |
| Inv 4 | 17.1 | 0.7 | 0.71 | 23.1 | 13.5 | 24.5/35 |
| Pr art | 16.3 | 4.3 | 0.82 | 43.1 | 22.2 | 24.2/36 |
| Inv 5 | 16.7 | 0.5 | 0.69 | 15.0 | 8.2 | 23.4/38 |

As can be seen from Table 9 hereabove, the invention size compositions improve the antistatic properties of treated fibers. Fibers treated with the invention composition generate far less fuzz accumulated on the walls of the apparatus. Also, the mean voltage and voltage extremes are far higher for prior art size compositions than for invention compositions; also the static voltage curve as a function of time all along the 50 cycles in the course of the test, is far more regular for invention size compositions than known compositions.

### EXAMPLE 13

The following sizing compositions were prepared for comparison purposes:

### Prior art composition:

| | | |
|---|---|---|
| - Size of Example 1 | | at 0.22 %LOI |
| - Binder (for 1001) | | at 0.83% LOI |
| | o Neoxil 962D | 20.87 kg |
| | o Neoxil 8294 | 15.13 kg |
| | o EM 054 | 16.67 kg |
| | o Water to add up to | 100L |

### Invention composition:

| | | |
|---|---|---|
| - Size of Example 1 | | at 0.22 %LOI |
| - Binder (for 1001) | | at 0.83 %LOI |
| | o Neoxil 962D | 20.87 kg |
| | o Neoxil 8294 | 15.13 kg |
| | o EM 054 | 16.67 kg |
| | o Water to add up to | 100L |
| - 50% solution of NaH2PO2 | | at 0.2 %LOI (monohydrate) |

The size compositions were applied by a conventional kiss roll applicator after Advantex glass fiber formation (average diameter of about 10µm) through a conventional die plate and cooling, as per Example 5. The size composition was applied at a rate so as to achieve a strand total LOI of 0.22 % solid on the glass fibers. The residual humidity at that stage was approximately 10 - 13 w% of the weight of coated glass. The glass fibers were then collected into strands and chopped into segments as described above. The chopped segments were pelletized with concomitant spraying of the above shown binder composition at a rate such as to achieve a fiber solid LOI) of 0.83, thus a total solid on fiber of (0.22 + 0.83) 1.05%. The treated fibers are then transferred to a drying and curing step with the residual moisture being brought down to approx. 0.05 %.

In the case of use of the invention composition, the hypophosphite is sprayed after this drying step with concomitant increase of residual moisture.

The thus treated fibers were compounded with PBT Ultradur B4520 as per Example 10 in order to ultimately form the required test samples with a glass content of 30%. The extruder used was a Werner and Pfleiderer ZSK 30 machine set at a throughput of 30 kg/h, rotation speed of about 400 rpm, melt temperature of about 330°C. The extrudate rod of approx. 2.5 mm diameter was cut into granules having a length of approx. 3.4 mm which were then fed to the Arburg injection molding equipment used in Example 10 in order to produce standard test samples as requested for the relevant tests.

| | Injection pressure |
|---|---|
| Prior art | 887 bar |
| Invention | 961 bar |

### Tensile Strength

| | Nbr of samples | MPa | Stand dev |
|---|---|---|---|
| Prior art | 10 | 143.42 | 0.84 |
| invention | 9 | 138.14 | 0.59 |

### Tensile Modulus

| | Nbr of samples | MPa | Stand dev |
|---|---|---|---|
| Prior art | 10 | 11141 | 490 |
| invention | 9 | 11174 | 158 |

### Tensile Elongation at Break

| | Nbr of samples | % | Stand dev |
|---|---|---|---|
| Prior art | 10 | 3.4680 | 0.1639 |
| invention | 9 | 3.6478 | 0.1648 |

## Claims

1. Aqueous sizing composition for reinforcing charges, comprising a silane coupling agent, an epoxy film forming polymer comprising 2-8 reactive epoxy groups per chain, said epoxy polymer being compatible with thermoplastic polyester matrix resin, and a hypophosphite, in an amount of 5 to 30 w% of the composition, preferably 7 to 25 w%, more preferably 10 to 20 w% and most preferably 12 to 18 w% of the composition.

2. Sizing composition of claim 1 **characterized in that** the silane coupling agent is a functional silane, preferably an amino functional silane coupling agent or an epoxy based silane coupling agent, in an amount of from 1 to 20, preferably 1 to 15, more preferably 2 to 10, most preferably 2 to 8 % by weight of the total solids in the sizing composition.

3. Sizing composition according to any preceding claim **characterized in that** the epoxy film forming polymer is present in an amount ranging from 25 to 80, preferably 30 to 70, more preferably 35 to 67, most preferably 40 to 60 % of the total composition.

4. Sizing composition according to any preceding claim **characterized in that** the hypophosphite is selected from hypophosphite salts, including metal hypophosphites, alkaline earth metal hypophosphites, ammonium hypophosphite and mixtures thereof, most preferably sodium or potassium hypophosphite.

5. Sizing composition according to any preceding claim further comprising a film forming polyurethane selected from polyether and polyester based polyurethanes.

6. Sizing composition according to Claim 5 **characterized in that** the polyurethane polymer(s) is(are) comprised between 10 and 50 % by weight of the total composition, preferably between 10 and 40 %, more preferably between 12 and 35 % by weight of the total composition.

7. Sizing composition according to any preceding claim further comprising a surfactant, preferably a nonionic surfactant selected from octylphenol ethoxylate, ethylene oxide/propylene oxide block copolymers or fluoroalkyl alcohol substituted polyethylene glycol.

8. Sizing composition according to any preceding claim further comprising a lubricant selected from polyoxy-alkylene-amines.

9. Sizing composition according to any preceding claim **characterized in that** it consists in a multi-part sizing composition comprising a size composition and a binder composition, the hypophosphite being comprised in an amount of 5 to 30 w% of the total composition, preferably 7 to 25 w%, more preferably 10 to 20 w% and most preferably 12 to 18 w% of the total composition wherein the size composition comprises the silane coupling agent, and the binder composition comprises the epoxy film forming polymer.

10. Sizing composition according to claim 9 wherein the binder composition comprises essentially no silane coupling agent.

11. Sizing composition according to claim 9 or 10 **characterized in that** the hypophosphite is included in the size composition and/or in the binder composition and/or constitutes a third part of the multi-part sizing composition.

12. Sizing composition according to claim 9, 10 or 11 **characterized in that** the binder composition comprises additional surfactant as per claim 7.

13. Sized reinforcing charge coated with a composition according to any of claims 1 to 11 at a rate of 0.4 to 1.4 % by weight of the glass charge, calculated as LOI.

14. Reinforced resin matrix comprising a thermoplastic polyester polymer selected from PBT and PET and sized reinforcing charge of claim 13.

15. Process for coating a reinforcing charge with a sizing composition **characterized in that** a sizing composition according to any of claims 1 to 12 is applied onto the reinforcing charge by rolling, brushing or spraying, at a rate of 0.4 to 1.4 % by weight of the reinforcing charge, calculated as LOI in the case of glass charges.

16. Process according to claim 15 for applying a multi-part sizing composition **characterized in** first applying the size composition comprising the coupling agent at a rate of 0.06 to 0.30 parts by weight of active solids on the reinforcing charge, followed by application of the binder composition at a rate of 0.10 to 1.40 parts by weight of active solids on the reinforcing charge.

17. Process according to claim 16 **characterized in that** the hypophosphite is applied separately in a third step at a rate of 0.125 to 0.25 parts by weight of active solids on reinforcing charge.
